# FASCICULE DE BREVET EUROPEEN

(11) **EP 0 658 972 B1**
(45) Date de publication et mention de la délivrance du brevet: **08.10.1997**
(21) Numéro de dépôt: 94402645.9
(22) Date de dépôt: 21.11.1994
(51) Int. Cl.: H02P 5/40

(54) **Système de controle d'alimentation d'un moteur asynchrone**
System zur Steuerung der Versorgung eines Asynchronmotors
Power supply control system for asynchronous motor

(30) Priorité: 16.12.1993 FR 9315273
(43) Date de publication de la demande: 21.06.1995
(73) Titulaire: SCHNEIDER ELECTRIC SA, 92100 Boulogne Billancourt (FR)
(72) Inventeur: Conrath, Christian, F-92500 Rueil Malmaison (FR); Nguyen Phuoc, Vinh.T., F-92100 Boulogne Sur Seine (FR)
(74) Mandataire: Saint Martin, René

(56) Documents cités:
- EP-A- 0 165 020
- PATENT ABSTRACTS OF JAPAN vol. 9, no. 118 (E-316) 23 Mai 1985 & JP-A-60 005 791
- PATENT ABSTRACTS OF JAPAN vol. 10, no. 46 (E-383) (2103) 22 Février 1986 & JP-A-60 200 790
- PATENT ABSTRACTS OF JAPAN vol. 10, no. 179 (E-414) 24 Juin 1986 & JP-A-61 026 496

## Description

La présente invention concerne un système de contrôle d'alimentation d'un moteur de type asynchrone.

Les moteurs asynchrones sont généralement alimentés à partir d'un réseau alternatif par l'intermédiaire d'un variateur de vitesse. Le variateur de vitesse est un convertisseur de fréquence comprenant un pont redresseur relié au réseau, un circuit intermédiaire de tension continue muni d'un condensateur, et un onduleur doté d'interrupteurs statiques commandés par un dispositif à modulation d'impulsions et relié aux enroulements de phase du moteur.

Un moteur travaillant en générateur génère un couple de freinage qui peut être utilisé pour compenser les pertes du système.

En freinant, le moteur agit en récupérateur d'énergie et charge le condensateur du circuit de tension continue. La charge du condensateur provoque une augmentation de la tension continue ou tension bus (V_{bus}) de ce circuit. Il est alors nécessaire que cette tension n'atteigne pas la tension maximale que peut supporter le condensateur ou les interrupteurs. La limitation de la tension à une tension seuil Vₛᵤₚ est réalisée en diminuant le courant circulant dans le moteur (voir JP-A-60 005 791).

Lorsqu'une coupure brève apparaît sur le réseau, il est connu de mettre le moteur en roue libre en bloquant tous les transistors, mais le moteur ne reste alors plus sous commande. La perte de contrôle de la vitesse entraîne, après la coupure une reprise difficile. Sans précaution, le régime transitoire mal maîtrisé entraîne des surintensités importantes. Il est donc préférable de garder le contrôle du moteur en l'amenant à freiner quand une coupure brève survient sur le réseau.

L'invention a pour but de limiter la tension continue V_{bus} du circuit intermédiaire grâce à une structure à régulations à cascade afin que la tension continue n'atteigne pas la tension maximale supportable par le condensateur.

Selon l'invention, la structure à régulations en cascade comprend un régulateur de fréquence, un limiteur de courant et un régulateur de courant pilotant en fréquence le circuit de commande; le régulateur de fréquence étant relié à l'entrée à un générateur de rampe fournissant la vitesse de démarrage du moteur, et à la sortie au limiteur de courant, ce dernier étant relié côté sortie au régulateur de courant. La structure de régulation est associée au circuit intermédiaire pour limiter la tension continue du condensateur grâce au limiteur de courant inséré dans ladite structure à régulations.

Lors d'une coupure de réseau, la structure à régulations limite la tension continue du condensateur tandis que le moteur fonctionne en générateur.

La tension continue est limitée par rapport à une tension de seuil Vₛᵤₚ, fonction de la tension nominale du réseau et de la tension maximale supportable par le condensateur.

Le limiteur de courant écrête le courant de sortie du régulateur de fréquence en valeur positive et en valeur négative.

Selon une autre caractéristique, le limiteur de courant écrête le courant de sortie du régulateur de fréquence, en valeur positive ou en valeur négative suivant le signe de la vitesse du moteur.

Lors d'une coupure du réseau, notamment une microcoupure, la structure à régulations limite la tension continue du condensateur, tandis que le moteur fonctionne en générateur, lorsque cette tension continue atteint une deuxième tension de seuil V_{sup'} inférieure à la tension de seuil Vₛᵤₚ.

Un bloc de traitement permet d'assurer la mesure de la tension continue V_{bus} et la comparaison avec le signal de la tension de seuil Vₛᵤₚ ou V_{sup'}.

La description faite ci-après en regard des dessins fera ressortir les caractéristiques et avantages de l'invention.

Aux dessins annexés :
- la figure 1 est le schéma du système conforme à l'invention ;
- la figure 2 simule le freinage du moteur à la vitesse nominale suivant la rampe ω_{ref} sans limitation de la tension bus ;
- la figure 3 simule une décélération qui s'écarte de la rampe initiale, avec limitation de la tension bus ;
- la figure 4 montre l'algorithme de protection de la tension maximale supportée par le condensateur;
- la figure 5 montre l'algorithme de protection de la tension maximale supportée par le condensateur pour un autre mode de réalisation ;
- la figure 6 simule une coupure brève du réseau.

Le système selon l'invention est associé à un moteur M de type asynchrone triphasé.

La vitesse de démarrage du moteur ω_{ref} est fournie par un générateur de rampe 24a. Le générateur de rampe a reçu en entrée une vitesse de consigne ω_{cons} fixée par l'utilisateur.

Le moteur est alimenté à partir d'un réseau alternatif par l'intermédiaire d'un variateur de vitesse. Le variateur de vitesse est de type convertisseur de fréquence.

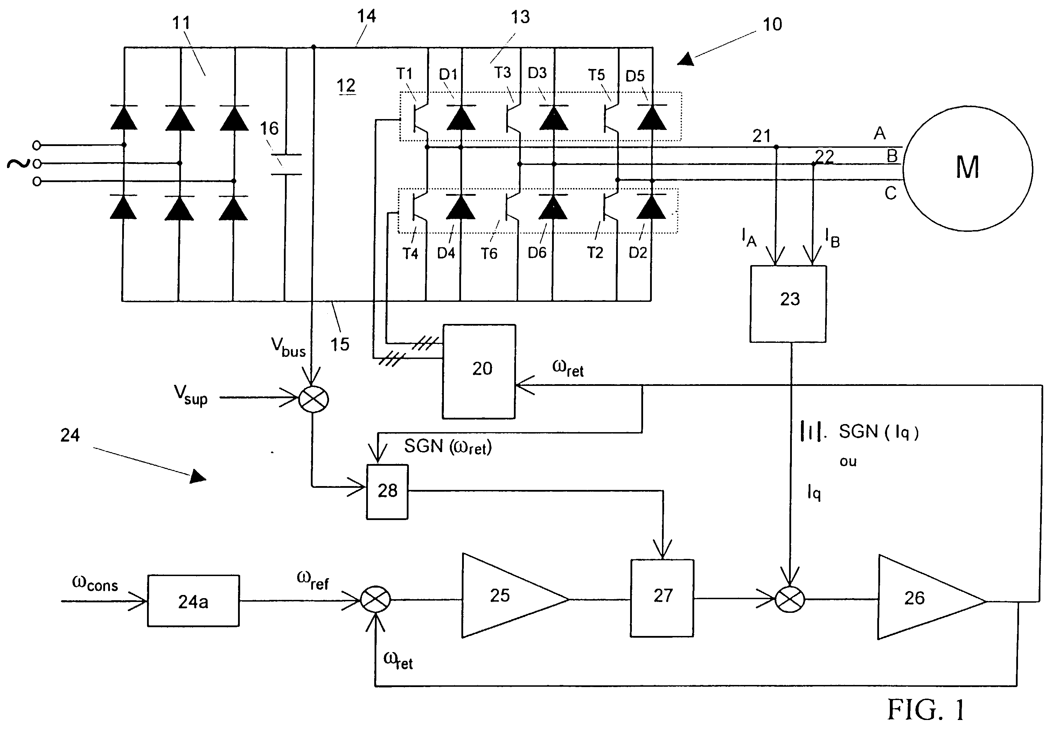

Le convertisseur statique de fréquence 10 illustré sur la figure 1 est relié au réseau de tension alternative triphasé ou éventuellement monophasé. Le convertisseur est du type à onde de tension et comporte un pont redresseur triphasé 11, un circuit intermédiaire de tension continue 12 et un onduleur 13.

Le pont redresseur 11 présente 6 diodes connectées aux phases du réseau de manière à délivrer en sortie une tension continue au circuit intermédiaire 12.

Le circuit intermédiaire comprend deux conducteurs 14,15 respectifs de voie haute et de voie basse entre lesquels est disposé un condensateur 16 de filtrage.

L'onduleur 13 est relié, côté entrée, aux conducteurs 14,15 et, côté sortie, aux conducteurs de phase A, B, C du moteur asynchrone M.

L'onduleur comprend trois couples d'interrupteurs statiques commandés, T1,T6 en parallèle auxquels sont disposées des diodes respectives D1,D6 de roue libre. Chaque couple d'interrupteurs comporte deux interrupteurs cascadés T1,T4 ; T3,T6 ; T5,T2 dont l'un T1,T3,T5 est dit de voie haute et l'autre T4,T6,T2 dit de voie basse. Le point milieu de chaque couple est connecté à un enroulement de phase respectif du moteur. Un circuit de commande 20 permet de rendre passants et bloquants les interrupteurs T1 à T6 aux instants choisis.

Des organes de lecture de courant 21 et 22 constitués par des capteurs du courant circulant dans les différentes phases sont prévus sur les conducteurs de phase A et B. Ils délivrent des signaux de courant lA et lB lus dans le repère fixe (A,B,C) correspondant aux enroulements de phases A, B et C. Le signal de courant l_{C} est déduit des mesures de l_{A} et l_{B}. Un bloc 23 de transformation de coordonnées transforme les signaux de courant l_{A},l_{B} et l_{C} en un signal Iq dans un repère (d,q) tournant à la vitesse de synchronisme, l'axe d étant orienté suivant le flux estimé du moteur. Le signal lq représente le signe du couple du moteur.

Le bloc 23 délivre le module |l| et le signe Sgn(l_{q}) du courant l_{q}, ou l_{q} en variante.

Le système selon l'invention comporte une structure 24 à régulations en cascade associée au circuit intermédiaire 12 du convertisseur de fréquence. La structure comprend un régulateur de fréquence 25 suivi d'un régulateur de courant 26 et un limiteur de courant 27 inséré entre les deux régulateurs.

Chaque régulateur est normalement constitué d'un amplificateur PI.

Le régulateur de fréquence 25 reçoit la fréquence issue du générateur de rampe et en contre-réaction la fréquence de retour délivrée par le régulateur de courant 26.

Le régulateur de courant 26 reçoit la tension de référence de courant du régulateur de fréquence, et en contre-réaction le signal de courant délivré par le bloc 23. En sortie le régulateur de courant pilote en fréquence le circuit de commande 20 de l'onduleur.

La tension de référence de courant peut être écrêtée par un limiteur 27. Le résultat consiste à protéger le condensateur.

Cette tension de référence de courant est écrêtée en valeur positive par Iₚₒₛ et en valeur négative par I_{neg}. Les valeurs d'écrêtage Iₚₒₛ et I_{neg} sont calculées en fonction du dépassement de la tension bus V_{bus} du circuit intermédiaire par rapport à une tension de seuil Vₛᵤₚ.

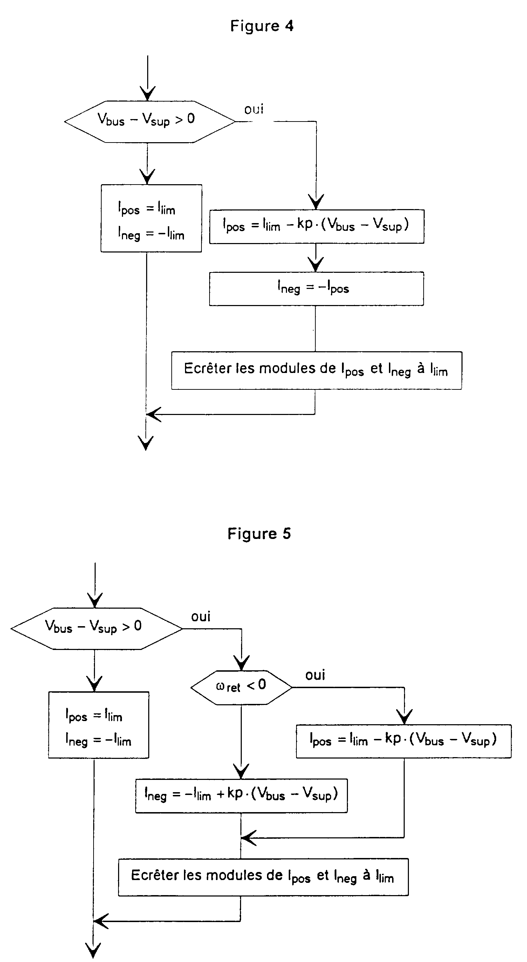

L'algorithme est illustré figure 4.

Si la tension bus ne dépasse pas la tension de seuil Vₛᵤₚ, le module du courant sera limité à une valeur Iₗᵢₘ.

Si la tension bus dépasse la tension de seuil Vₛᵤₚ, le module du courant sera limité à une valeur inférieure à Iₗᵢₘ. Le correcteur utilisé par le limiteur 27 sera un gain proportionnel kp exprimé en A/V.

Le système comporte aussi un bloc de traitement 28 qui assure la mesure de la tension continue ou tension bus V_{bus}, et la comparaison avec le signal de la tension de seuil Vₛᵤₚ. La tension de seuil est fonction de la tension nominale du réseau et de la tension maximale supportée par le condensateur.

Dans un autre mode de réalisation, les valeurs d'écrêtage du courant sont calculées en fonction du dépassement de la tension bus V_{bus} du circuit intermédiaire par rapport à une tension de seuil Vₛᵤₚ, et du signe de la vitesse ωᵣₑₜ pour ne limiter que l'énergie de récupération. Suivant le signe de la vitesse on écrêtera en valeur positive ou en valeur négative, comme illustré sur l'algorithme de la figure 5.

Le fonctionnement du système va maintenant être expliqué :

La vitesse du moteur varie suivant une rampe de vitesse ω_{ref}. Lorsque par exemple, une coupure brève du réseau apparaît, on provoque une décélération du moteur par un affichage de la fréquence de consigne plus faible ou nulle, la vitesse ωᵣₑₜ diminuant suivant la rampe ω_{ref}. La décélération trop rapide du moteur entraîne une dissipation de l'énergie cinétique importante dans le variateur de vitesse. Une partie de l'énergie produite par cette décélération est renvoyée dans le circuit intermédiaire 12 de tension continue ou tension bus. Le condensateur 16 se recharge et la tension bus augmente, comme représenté figure 2.

Cette tension V_{bus} ne doit cependant pas dépasser la tension maximale que le condensateur peut supporter. Aussi lorsque la tension bus atteint une tension de seuil Vₛᵤₚ détectée par le bloc de traitement 28, la tension est régulée pour rester constante.

La limitation est réalisée en écrêtant le courant grâce au limiteur 27 selon l'algorithme de la figure 4 ou de la figure 5.

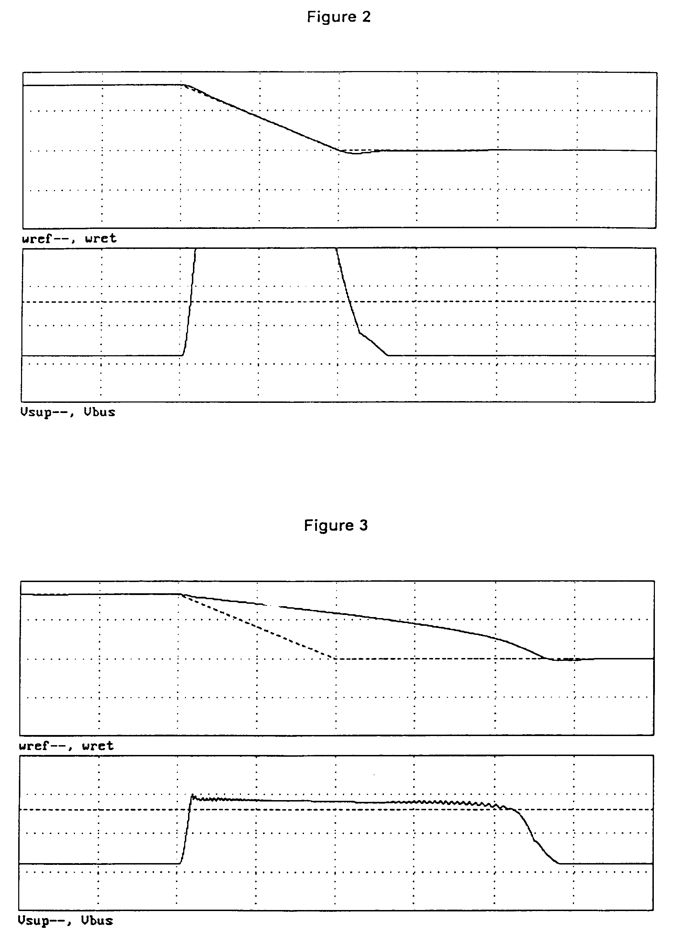

Si la tension continue V_{bus} dépasse le seuil Vₛᵤₚ, la limitation de courant entraîne une modification de la rampe de décélération suivant une rampe réelle ωᵣₑₜ qui s'écarte de la rampe initiale ω_{ref}. La figure 3 illustre le contrôle de la tension continue V_{bus}.

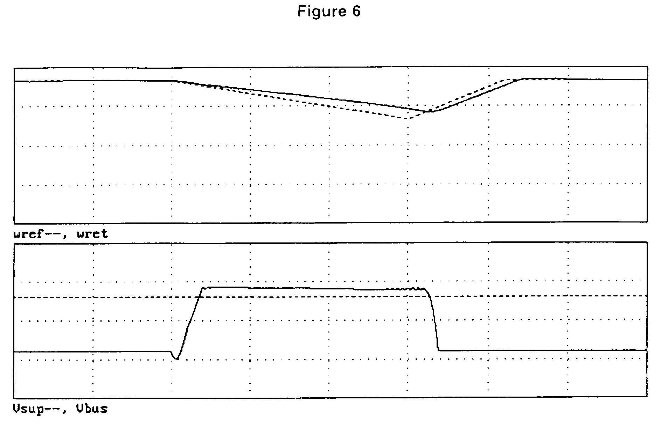

La figure 6 simule le cas particulier d'une coupure brève du réseau avec contrôle de la tension bus. Lorsque le réseau réapparaît le moteur accélère tandis que la tension bus revient à sa valeur normale.

Dans un autre mode de réalisation, en cas de microcoupure, la structure de régulation 24 limite la tension continue V_{bus} du condensateur 16, tandis que le moteur fonctionne en générateur, lorsque cette tension continue atteint une deuxième tension de seuil V_{sup'} inférieure à la tension de seuil Vₛᵤₚ. On évite ainsi de charger inutilement le condensateur c'est-à-dire de freiner le moteur en début de coupure.

La comparaison de la tension continue avec la tension V_{sup'} est assurée par le bloc 28.

## Revendications

1. Système de contrôle d'alimentation d'un moteur asynchrone alimenté à partir d'un réseau alternatif par l'intermédiaire d'un variateur de vitesse (10) ; le variateur de vitesse comportant un pont redresseur (11) relié au réseau, un circuit intermédiaire (12) de tension continue (V_{bus}) muni d'un condensateur (16), un onduleur (13) muni d'interrupteurs contrôlés par un circuit de commande (20), et relié aux enroulements de phase du moteur, caractérisé en ce que
- il comprend une structure (24) à régulations en cascade dotée d'un régulateur de fréquence (25), d'un limiteur de courant (27) et d'un régulateur de courant (26) pilotant en fréquence le circuit de commande (20) ; le régulateur de fréquence étant relié à l'entrée à un générateur de rampe fournissant la vitesse de démarrage du moteur, et à la sortie au limiteur de courant (27), ce dernier relié côté sortie au régulateur de courant (26) ;
- la structure (24) à régulations en cascade est associée au circuit intermédiaire pour limiter la tension continue (V_{bus}) du condensateur (16) grâce au limiteur de courant (27) inséré dans ladite structure à régulations en cascade.

2. Système selon la revendication 1, caractérisé en ce que lors d'une coupure de réseau, la structure à régulations (24) limite la tension continue (V_{bus}) du condensateur (16) tandis que le moteur fonctionne en générateur.

3. Système selon la revendication 1 ou 2, caractérisé en ce que la tension continue (V_{bus}) est limitée par rapport à une tension de seuil (Vₛᵤₚ) fonction de la tension nominale du réseau et de la tension maximale supportable par le condensateur.

4. Système selon l'une quelconque des revendications, caractérisé en ce que le limiteur de courant (27) écrête le courant de sortie du régulateur de fréquence (25), en valeur positive et en valeur négative.

5. Système selon l'une quelconque des revendications précédentes, caractérisé en ce que le limiteur de courant (27) écrête le courant de sortie du régulateur de fréquence (25), en valeur positive ou en valeur négative suivant le signe de la vitesse du moteur.

6. Système selon la revendications 3, caractérisé en ce que lors d'une coupure du réseau, notamment une microcoupure, la structure à régulations (24) limite la tension continue (V_{bus}) du condensateur (16), tandis que le moteur fonctionne en générateur, lorsque cette tension continue atteint une deuxième tension de seuil (V_{sup'}) inférieure à la tension de seuil (Vₛᵤₚ).

7. Système selon l'une quelconque des revendications, caractérisé en ce qu'il comprend un bloc de traitement (28) assurant la mesure de la tension continue (V_{bus}) et la comparaison avec le signal de la tension de seuil (Vₛᵤₚ ou V_{sup'}).

## Patentansprüche

1. Versorgungssteuersystem eines ab einem Wechselstromnetz über einen Drehzahlwandler (10) versorgten Asynchronmotors, wobei der Drehzahlwandler eine am Netz angeschlossene Gleichrichterbrücke (11), einen zwischengeschalteten Gleichspannungskreis (v_{bus}) mit einem Kondensator (16), einen mit von einem Steuerkreis (20) gesteuerten Schaltern ausgerüsteten und an den Phasenwicklungen des Motors angeschlossenen Wechselrichter (13) umfaßt, dadurch gekennzeichnet, daß
- es eine Kaskadenregelungsstruktur (24) mit einem Frequenzregler (25), einem Strombegrenzer (27) und einem die Frequenz des Steuerkreises (20) steuernden Stromregler (26) umfaßt, wobei der Frequenzregler an den Eingang eines Rampengenerators angeschlossen ist, der die Anlaufdrehzahl des Motors liefert, und am Ausgang am Strombegrenzer (27), der ausgangsseitig am Stromregler (26) angeschlossen ist;
- die Kaskadenregelungsstruktur (24) dem Zwischenkreis zugeordnet ist, um die Gleichspannung (v_{bus}) des Kondensators (16) anhand des in die besagte Kaskadenregelungsstruktur eingefügten Strombegrenzers (27) zu begrenzen.

2. System nach Anspruch 1, dadurch gekennzeichnet, daß die Regelungsstruktur (24) bei einem Netzausfall die Gleichspannung (v_{bus}) des Kondensators (16) begrenzt, während der Motor als Generator funktioniert.

3. System nach Anspruch 1 oder 2, dadurch gekennzeichnet, daß die Gleichspannung (v_{bus}) in Bezug auf eine Grenzspannung (Vₛᵤₚ) begrenzt ist, die Funktion der Nennspannung des Netzes und der maximalen, vom Kondensator erträglichen Spannung ist.

4. System nach einem der Ansprüche, dadurch gekennzeichnet, daß der Strombegrenzer (27) den Ausgangsstrom des Frequenzreglers (25) in positivem Wert und im negativem Wert kappt.

5. System nach einem der vorstehend genannten Ansprüche, dadurch gekennzeichnet, daß der Strombegrenzer (27) den Ausgangsstrom des Frequenzreglers (25) in positivem Wert und im negativem Wert kappt, entsprechend dem Zeichen der Motordrehzahl.

6. System nach Anspruch 3, dadurch gekennzeichnet, daß die Regelungsstruktur (24) bei einem Netzausfall, insbesondere bei einer Mikrounterbrechung, die Gleichspannung (v_{bus}) des Kondensators (16) begrenzt, während der Motor als Generator funktioniert, wenn diese Gleichspannung eine zweite Grenzspannung (V_{sup'}) erreicht, die kleiner ist als die Grenzspannung (Vₛᵤₚ).

7. System nach einem der Ansprüche, dadurch gekennzeichnet, daß es einen Verarbeitungsblock (28) umfaßt, der die Messung der Gleichspannung (v_{bus}) und den Vergleich mit dem Signal des Grenzspannung (Vₛᵤₚ bzw. V_{sup'}) gewährleistet.

## Claims

1. System for controlling the supply of power to an asynchronous motor supplied with power from an AC line voltage through a variable speed drive including a rectifier bridge connected to said AC line voltage, a DC voltage intermediate circuit including a capacitor, and an inverter including switches controlled by a control circuit and connected to phase windings of said motor, wherein:
- said system includes a cascade regulation structure including a frequency regulator, a current limiter and a current regulator driving said control circuit, said frequency regulator input being connected to a ramp generator supplying a motor start speed and said frequency regulator output being connected to said current limiter, the output of the latter being connected to said current regulator;
- said cascade regulation structure is associated with said intermediate circuit to limit the DC voltage at said capacitor by means of said current limiter included in said cascade regulation structure.

2. System according to claim 1 wherein in the event of interruption of the AC line voltage said regulation structure limits said DC voltage at the capacitor while said motor is operating as a generator.

3. System according to claim 1 wherein said DC voltage is limited relative to a threshold voltage dependent on the nominal AC line voltage and on the maximal voltage that said capacitor is rated to withstand.

4. System according to claim 1 wherein said current limiter peak limits positive and negative values of the output current of the frequency regulator.

5. System according to claim 1 wherein said current limiter peak limits positive or negative values of the output current of said frequency regulator, depending on the sign of the motor speed.

6. System according to claim 3 wherein in the event of interruption of the AC line voltage, in particular a very short term interruption, said regulation structure limits said DC voltage at said capacitor while said motor is operating as a generator if said DC voltage reaches a second threshold value less than said threshold voltage.

7. System according to claim 1 including a processor for measuring said DC voltage and comparing it with said threshold voltage signal.
